# EUROPEAN PATENT APPLICATION

(11) **EP 4 230 103 A1**
(43) Date of publication of application: **23.08.2023**
(21) Application number: 20873346.9
(22) Date of filing: 13.11.2020
(51) Int. Cl.: A47L 9/16, A47L 9/20, A47L 5/22

(54) **VACUUM CLEANER**

(30) Priority: 15.10.2020 CN 202022301318 U
(71) Applicant: Shenzhen Juneng Vehicle Technology Co., Ltd., Shenzhen, Guangdong 518123 (CN)
(72) Inventor: DENG, Haiquan, Guangdong 518123 (CN); CHEN, Longlin, Guangdong 518123 (CN)
(74) Representative: Marks & Clerk LLP
(86) International application number: PCT/CN2020/128614
(87) International publication number: WO 2022/077683

(57) **Abstract**

A dust collector (100) is provided, which includes a housing (110), a filter screen (120), and a spiral air director (130). The housing (110) is provided with an air inlet (111), an air inlet channel (112), an air outlet channel, an air outlet (113), and a dust collection chamber. The dust collection chamber is in communication with the air inlet (111) and the air outlet (113) through the air inlet channel (112) and the air outlet channel, respectively. The filter screen (120) is disposed in the air outlet channel. The spiral air director (130) is disposed in the air outlet channel and located on at least one side of an air inlet side and an air outlet side of the filter screen (120). Air flow flowing through the air outlet channel is directed by the spiral air director (130) to form a swirling air flow.

## Description

### TECHNICAL FIELD

The present disclosure relates to a technical field of cleaning articles, and in particularly, relates to a dust collector.

### BACKGROUND

A dust collector is a common cleaning tool, which generally includes components such as a housing, a sucker, a waste box, a filter screen, and a motor. Negative pressure can be generated when the motor operates, so that impurities such as dust and debris are sucked into the housing through the sucker and enter the waste box. After being filtered by the filter screen, the debris remains in the waste box, and the resulted exhaust air is discharged from an exhaust channel.

Since air flow in the dust collector has an extremely high flow rate, the dust and debris entrained in the air flow will impinge on the filter screen at a high rate and be adsorbed on a surface of the filter screen. Moreover, during the use of the dust collector, there is always a pressure difference between both sides of the filter screen, so that the impurities attached to the filter screen are accumulated continuously, and eventually the filter screen is clogged and the dust collector cannot operate normally.

### SUMMARY

Accordingly, in order to address a problem that the filter screen tends to be clogged during use, it is necessary to provide a dust collector capable of effectively preventing a filter screen of the dust collector from being clogged.

A dust collector includes:
a housing provided with an air inlet, an air inlet channel, an air outlet channel, an air outlet, and a dust collection chamber, the dust collection chamber being in communication with the air inlet and the air outlet through the air inlet channel and the air outlet channel, respectively;
a filter screen disposed in the air outlet channel; and
a spiral air director disposed in the air outlet channel and located on at least one side of an air inlet side and an air outlet side of the filter screen, and wherein air flow flowing through the air outlet channel is directed by the spiral air director to form a swirling air flow.

In one of the embodiments, the air inlet channel and the air outlet channel are in communication with the same side of the dust collection chamber, and form a U-shaped chamber structure in cooperation with the dust collection chamber.

In one of the embodiments, the dust collector further includes a dust collection box detachably mounted on the housing. The dust collection box has a hollow structure with an opening on one side, and forms the dust collection chamber in cooperation with the housing.

In one of the embodiments, the dust collection box is provided with an openable cover at bottom thereof.

In one of the embodiments, the dust collection box has at least one transparent side wall.

In one of the embodiments, the spiral air director includes an annular frame and a plurality of blades. Each of the blades extends from a center of the frame to an edge thereof. The plurality of blades are arranged radially.

In one of the embodiments, the spiral air director is disposed on both the air inlet side and the air outlet side of the filter screen.

In one of the embodiments, the spiral air director located on the air inlet side of the filter screen and the spiral air director located on the air outlet side thereof are coaxially arranged, and the spiral air directors located on both sides are misaligned in a circumferential direction of the frame.

In one of the embodiments, the spiral air director further includes a ventilation ring located in a middle of the frame and coaxially disposed with the frame. Each of the blades extends from an outer wall of the ventilation ring to an inner wall of the frame.

In one of the embodiments, the spiral air director includes a spiral-shaped air directing sheet disposed on an inner wall of the air outlet channel and extending spirally around an axis of the air outlet channel.

When the dust collector is started, the air flow entrained with impurities enters the dust collection chamber through the air inlet and the air inlet channel. The impurities in the air flow are blocked by the filter screen and are left in the dust collection chamber, and the remaining exhaust air is discharged from the air outlet through the air outlet channel. When the air flow passes through the spiral air director, the air flow is turned into the swirling air flow under the action of the spiral air director. In other words, the air flow flowing through the air outlet channel does not straightly blow to the filter screen. Therefore, the impurities in the air flow will not impinge on the filter screen vertically, but have a lateral velocity, so the impurities do not easily to attach to the filter screen. In addition, the swirling air flow can further create disturbances, so as to roll up the impurities adsorbed on the surface of the filter screen, which can further prevent the impurities from being accumulated on the surface of the filter screen. Therefore, the above-mentioned dust collector can effectively avoid the filter screen from being clogged during operation.

### BRIEF DESCRIPTION OF THE DRAWINGS

To illustrate the technical solutions according to the embodiments of the present disclosure more clearly, the accompanying drawings for describing the embodiments are introduced briefly in the following. Apparently, the accompanying drawings in the following description are only some embodiments of the present disclosure, and persons of ordinary skill in the art can derive other drawings from the accompanying drawings without creative efforts.
FIG. 1 is a schematic view of a dust collector according to a preferred embodiment of the present disclosure.
FIG. 2 is an exploded view of the dust collector shown in FIG. 1.
FIG. 3 is a partial schematic view of the dust collector shown in FIG. 2 from another aspect.
FIG. 4 is a schematic view of a spiral air director of the dust collector shown in FIG. 3.

### DETAILED DESCRIPTION OF THE EMBODIMENTS

In order to make the above objects, features and advantages of the present disclosure more obvious and understandable, the specific embodiments of the present disclosure will be illustrated in detail below in conjunctions with the accompanying drawings. In the following description, many specific details are set forth in order to assist readers in fully understanding the present disclosure. However, the present disclosure can be implemented in many other ways than described herein, and those skilled in the art can make similar improvements without departing from the connotation of the present disclosure. Therefore, the present disclosure is not limited by the specific embodiments disclosed below.

In the description of the present disclosure, it should be understood that orientation or positional relationships indicated by terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial" ,"radial", "circumferential", etc. are based on orientation or positional relationship shown in the drawings, which are merely to facilitate the description of the present disclosure and simplify the description, not to indicate or imply that the device or elements must have a particular orientation, be constructed and operated in a particular orientation, and therefore cannot be construed as a limitation on the present disclosure.

In addition, the terms "first" and "second" are used for description only, and cannot be understood as indicating or implying relative importance or implicitly indicating the number of technical features described. Thus, the features defined with "first" and "second" may include at least one of the features explicitly or implicitly. In the description of the present disclosure, the meaning of "plurality" is at least two, such as two, three, etc., unless explicitly defined otherwise.

In the present disclosure, unless explicitly specified and limited otherwise, the terms "mounting", "connecting", "connected", "fixed" and the like should be understood in a broad sense. For example, it may be a fixed connection or a detachable connection, or an integration, may be a mechanical connection or electrical connection, may be a direct connection, or may be an indirect connection through an intermediate medium, may be the connection between two elements or the interaction relationship between two elements, unless explicitly defined otherwise. The specific meanings of the above terms in the present disclosure can be understood by one of those ordinary skills in the art according to specific circumstances.

In the present disclosure, unless explicitly specified and limited otherwise, the first feature being "on" or "below" the second feature may be that the first and second features are in a direct contact, or the first and second features are in an indirectly contact through an intermediate medium. Moreover, the first feature being "over", "above" and "on" the second feature may be that the first feature is directly above or obliquely above the second feature, or simply means that the first feature is higher than the second feature in horizontal direction. The first feature being "beneath", "under", and "below" the second feature may be that the first feature is directly below or obliquely below the second feature, or simply means that the first feature is lower than the second feature in horizontal direction.

It should be noted that when an element is referred to as being "fixed" or "disposed on" another element, it may be directly on another element or there may also be an intermediate element therebetween. When an element is considered to be "connected" to another element, it may be directly connected to another element or there may be an intermediate element therebetween. As used herein, the terms "vertical", "horizontal", "upper", "lower", "left", "right", and similar expressions are for illustration only and are not meant to be the only embodiments.

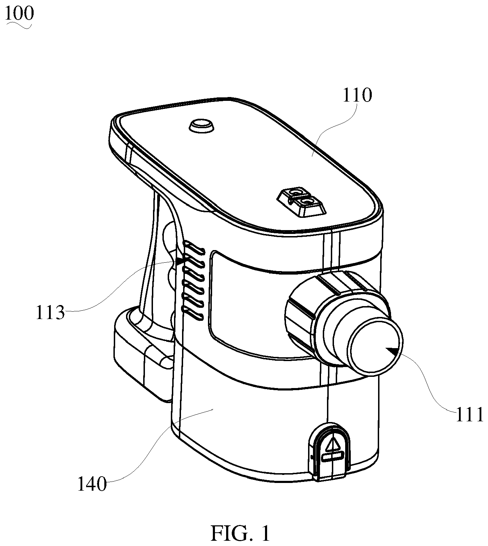

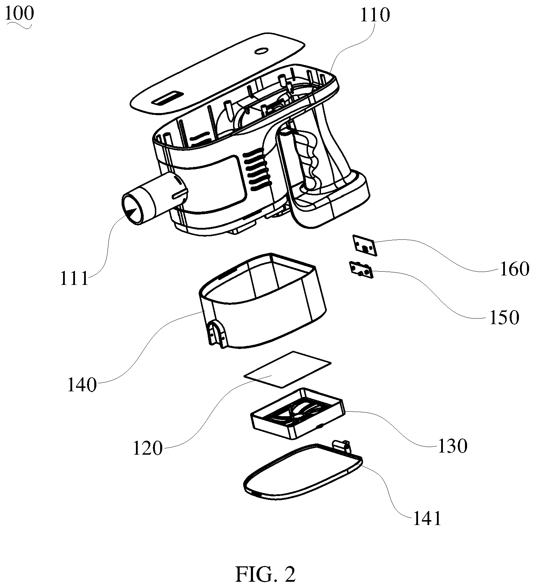

Referring to FIGS. 1 to 3, a dust collector 100 according to a preferred embodiment of the present disclosure includes a housing 110, a filter screen 120, and a spiral air director 130.

The housing 110 is generally formed of materials such as plastic, resin, or the like, and a handle (not labeled) for holding is formed on the housing 110. The housing 110 is provided with an air inlet 111, an air inlet channel 112, an air outlet channel (not shown), an air outlet 113, and a dust collection chamber (not shown). The dust collection chamber is in communication with the air inlet 111 and the air outlet 113 through the air inlet channel 112 and the air outlet channel, respectively.

The filter screen 120 is disposed in the air outlet channel. The filter screen 120 can be mounted on an inner wall of the air outlet channel through a structure such as a snap-fit, which is convenient for disassembly and assembly. The filter screen 120 may be a paper disposable filter screen, which can be directly replaced when clogged or contaminated. The filter screen 120 may also be a plastic filter screen, which can be cleaned when clogged or contaminated. The filter screen 120 allows gas to pass through but prevents larger particles from passing through.

Obviously, in order to perform dust collection, the dust collector 100 further includes a driving motor (not shown) for generating suction, and the driving motor is received and fixed in the housing 110. When the driving motor starts to operate, negative pressure is formed in the air inlet channel 112, and air flow entrained with impurities enters the dust collection chamber through the air inlet 111 and the air inlet channel 112. The impurities in the air flow are blocked by the filter screen 120 and are left in the dust collection chamber. The remaining exhaust air is discharged from the air outlet 113 through the air outlet channel.

The dust collection chamber can be opened. When the impurities collected in the dust collection chamber reach the maximum allowable capacity (that is, the dust collection chamber is fully loaded), the dust collection chamber can be opened and the collected impurities can be cleaned.

Specifically, in this embodiment, the dust collector 100 further includes a dust collection box 140 detachably mounted on the housing 110. The dust collection box 140 has a hollow structure with an opening on one side and forms the dust collection chamber in cooperation with the housing 110.

The dust collection box 140 may be made of the same material as the housing 110, or may also have a square or circular hollow structure. Generally, the dust collection box 140 is mounted to the housing 110 through a snap-fit. When the dust collection chamber is fully loaded, the dust collection box 140 can be removed to clean up the impurities. In this case, after the dust collection box 140 is removed, the dust collection chamber is opened, and the air outlet channel and the filter screen 120 are exposed, so that the filter screen 120 can be conveniently removed, replaced, or cleaned.

Furthermore, in this embodiment, the dust collection box 140 is provided with an openable cover 141 at a bottom thereof. The cover 141 can be connected to the dust collection box 140 through a rotating shaft and a hinge. When the impurities in the dust collection box 140 need to be cleaned, there is no need to remove the dust collection box 140 from the housing 110 and just open the cover 141, which is more convenient for operation.

In addition, in order to avoid accidental start of the driving motor due to false touch when the dust collection chamber is opened resulting in safety hazards, specifically, in this embodiment, the dust collector 100 further includes a trigger switch 150 electrically connected to the driving motor. When the dust collection chamber is in an open state, the trigger switch 150 enables the driving motor to be in a power-off state.

The trigger switch 150 can be disposed between the dust collection box 140 and the housing 110, or can be disposed on the cover 141. When the dust collection box 140 is fully loaded and thus needs to be cleaned of the impurities, the dust collection box 140 can be removed from the housing 110 or the cover 141 can be opened. In this case, the trigger switch 150 will enable the driving motor to be in a power-off state. Therefore, even if a false touch occurs, the driving motor will not be started, thereby improving the safety of the dust collector 100.

Furthermore, in this embodiment, the dust collection box 140 has at least one transparent side wall. The dust collection box 140 may be integrally formed of transparent material, or one or more of the side walls may be replaced by transparent plates. By providing the transparent side wall, the inside of the dust collection chamber can be observed in real time. In this way, once the dust collection box 140 is fully loaded, the user can observe this situation in time and clean the dust collection box 140 up in time. Moreover, a state of the filter screen 120 can be observed through the transparent side wall to determine whether the filter screen 120 is clogged.

Specifically, in this embodiment, the side wall of the dust collection box 140 is formed of light conducting material, and thus the entire dust collection box 140 can conduct light. In addition, in order to indicate the state of the dust collector 100 such as loading status of the dust collection box 140, or whether the filter screen 120 is clogged, specifically, in this embodiment, the dust collector 100 further includes a status indicator lamp 160. The status indicator lamp 160 emits an indicating light when a trigger condition is met. The indicating light can be conducted to the side wall of the dust collection box 140.

The trigger condition may be the occurrence of that the dust collection box 140 is fully loaded, the filter screen 120 is clogged, or the like. After the indicating light is conducted to the side wall of the dust collection box 140, since the side wall of the dust collection box 140 is formed of light-transmitting material, the indicating light can light up the entire dust collection box 140. Therefore, the dust collector 100 has a better indicating effect.

Further, there are a plurality of status indicator lamps 160, and the plurality of status indicator lamps each emit an indicating light when the corresponding trigger condition is met. The plurality of status indicator lamps 160 have indicating light with different colors.

In other words, when different situations occur, the lighted colors of the dust collection box 140 are different. For example, when the dust collection box 140 is fully loaded, the corresponding status indicator 160 may emit red light; and when the filter screen 120 is clogged, the corresponding status indicator 160 may emit blue light. In this way, the user can know the state of the dust collector 100 only according to the color of the dust collection box 140, which makes the operation more convenient.

The spiral air director 130 is disposed in the air outlet channel and located on at least one side of an air inlet side and an air outlet side of the filter screen 120. The air flow flowing through the air outlet channel is directed by the spiral air director 130 to form a swirling air flow. The spiral air director 130 is provided with a guiding structure capable of changing a flowing direction of the air to a predetermined direction. When the air flows through the spiral air director 130, the direction of the air flow is changed by guiding the air, thereby forming the swirling air flow.

When the dust collector 100 operates, the air flow entrained with impurities will flow sequentially from the air inlet channel 112 and the dust collection chamber to the filter screen 120. After being directed by the spiral air director 130, the air flow flowing through the air outlet channel does not straightly blow to the filter screen 120, but swirlingly blow to the filter screen 120. Therefore, the impurities in the air flow will not impinge on the filter screen 120 vertically, but have a lateral velocity, and thus the impinging of the impurities on the filter screen 120 is weakened, and the impurities do not easily attach to the filter screen 120. Moreover, the swirling air flow can further create disturbances, so as to roll up the impurities that have been adsorbed on the surface of the filter screen 120, thereby preventing the impurities from being accumulated continuously on the surface of the filter screen 120. It can be learned that, although there is a pressure difference between the both sides of the filter screen 120 when the dust collector 100 operates, the impurities are still not easy to deposit on the surface of the filter screen 120, which can effectively prevent the filter screen 120 from being clogged and ensure the efficiency of the dust collector 100.

In this embodiment, the air inlet channel 112 and the air outlet channel are in communication with the same side of the dust collection chamber, and form a U-shaped chamber structure in cooperation with the dust collection chamber.

The air inlet channel 112 and the air outlet channel may be elongated channels, which are provided side by side and have an opening, which is in communication with the dust collection chamber, facing towards the same direction. That is, the opening of the air inlet channel 112 is not disposed opposite to the opening of the air outlet channel. When entering the dust collection chamber through the air inlet channel 112, the air flow entrained with the impurities will first impinge on the bottom of the dust collection chamber. Then, the air flow that has changed its direction flows to the air outlet channel. In other words, the air flow flowing from the air inlet channel 112 does not directly blow to the air outlet channel, but is buffered before entering the air outlet channel. Therefore, the impinging force when the impurities impinge on the filter screen 120 is significantly reduced, so that the attachment of the impurities on the surface of the filter screen 120 can be further prevented.

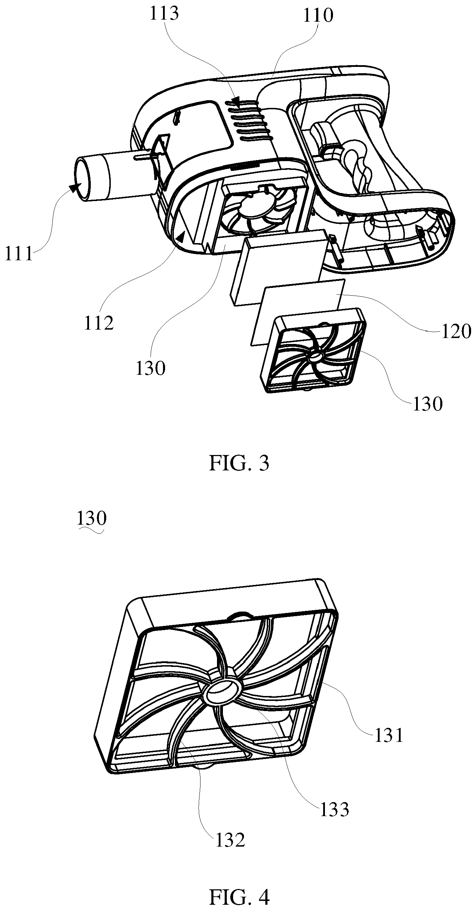

The spiral air director 130 may be located on the air inlet side of the filter screen 120, and may also be located on the air outlet side of the filter screen 120. As shown in FIG. 3, specifically, in this embodiment, the air inlet side and the air outlet side of the filter screen 120 are both provided with the spiral air directors 130. The spiral air directors 130 on both sides of the filter screen 120 may have the same structure. When passing through the filter screen 120, the air flow will be directed twice by the spiral air director 130, and thus the flowing direction of the air flow will be deflected twice. In this way, the swirling speed of the formed swirling air flow will be faster, so that a greater disturbance can be formed on the surface of the filter screen 120, and the effect of rolling up the impurities is also more significant.

The spiral air director 130 may have many possible specific structures, as long as the spiral air director 130 enables the air flow straightly blowing to the air outlet channel to pass through the spiral air director 130 to form the swirling air flow.

Referring to FIG. 4, specifically, in this embodiment, the spiral air director 130 includes an annular frame 131 and a plurality of blades 132. Each blade 132 extends from a center of the frame 131 to an edge thereof. The plurality of blades 132 are arranged radially.

An outline of the frame 131 matches an inner outline of the air outlet channel, and may be in a circular ring or a rectangular ring structure. The frame 131 plays a supporting role and can be fixed to the air outlet channel by means of snap-fitting. A surface of each blade 132 has a certain slope, so as to direct the air and deflect the flowing direction of the air.

The air flow can pass through the spiral air director 130 from a gap between two adjacent blades 132. The plurality of blades 132 divide the air flow into a plurality of small air flow. Each air flow can form a swirling air flow under the action of the blades 132. In this way, when the air flow passes through the spiral air director 130, a situation in which a plurality of swirling air flows interact with each other will be formed, which will create greater disturbance on the surface of the filter screen 120, so that the cleaning effect of impurities deposited on the surface of the filter screen 120 is better. The probability of clogging of the filter screen 120 is further reduced.

Obviously, in other embodiments, the spiral air director 130 may also have other structures. For example, in another embodiment, the spiral air director 130 includes a spiral-shaped air directing sheet (not shown) disposed on the inner wall of the air outlet channel and extending spirally around an axis of the air outlet channel.

The spiral-shaped air directing sheet will cause the air flow flowing through the air outlet channel to flow along a spiral path, thereby forming the swirling air flow. In this case, the air flow swirls as a whole, a plurality of swirling air flows are not formed. The spiral-shaped air directing sheet can extend to both sides of the filter screen 120 or can be distributed on only one side of the filter screen 20.

Further, in this embodiment, the spiral air director 130 located on the air inlet side of the filter screen 120 and the spiral air director 130 located on the air outlet side thereof are coaxially arranged. In addition, the spiral air directors 130 located on the both sides are misaligned in a circumferential direction of the frame 131.

The misalignment means that the spiral air director 130 located on one side is rotated by a predetermined angle along the circumferential direction of the frame 131 with respect to the spiral air director 130 located on the other side. Therefore, the blades 132 of the spiral air directors 130 located on the both sides are not completely aligned. With this arrangement, when the air flow passes through the spiral air directors 130 located on both sides, the faster the swirling speed of the formed swirling air flow is, the better the disturbance effect is, and the cleaning effect on the filter screen 120 can be further enhanced.

Further, in this embodiment, the spiral air director 130 further includes a ventilation ring 133 located in a middle of the frame 131 and coaxially disposed with the frame 131. Each of the blades 132 extends from an outer wall of the ventilation ring 133 to an inner wall of the frame 131.

The ventilation ring 133 may have a circular ring structure, and is made of the same material as the frame 131. When the air flow passes through the spiral air director 130, a part of the air flow directly passes through the ventilation ring 133 to form a central air flow, and the other part of the air flow passes through the gaps between the blades 132 to form an edge air flow. Due to the blocking of the blades 132, a flow rate of the edge air flow will be less than that of the center air flow. According to Bernoulli's principle, the greater the flow rate is, the lower the pressure is. Therefore, the edge air flow will have a tendency to approach towards the central air flow. In this way, the swirling of the air flow can be more significant, thereby further enhancing the disturbance effect of the swirling air flow on the surface of the filter screen 120.

When the dust collector 100 is started, the air flow entrained with impurities enters the dust collection chamber through the air inlet 111 and the air inlet channel 112. The impurities in the air flow are blocked by the filter screen 120 and are left in the dust collection chamber, and the remaining exhaust air is discharged from the air outlet 113 through the air outlet channel. When the air flow passes through the spiral air director 130, the air flow is turned into the swirling air flow under the action of the spiral air director 130. In other words, the air flow flowing through the air outlet channel does not straightly blow to the filter screen 120. Therefore, the impurities in the air flow will not impinge on the filter screen 120 vertically, but have a lateral velocity, so the impurities do not easily attach to the filter screen 120. In addition, the swirling air flow can further create disturbances, so as to roll up the impurities adsorbed on the surface of the filter screen 120, which can further prevent the impurities from being accumulated on the surface of the filter screen 120. Therefore, the above-mentioned dust collector 100 can effectively avoid the filter screen 120 from being clogged during operation.

The technical features of the embodiments as described above can be arbitrarily combined. In order to make the description concise, there is no describing of all possible combinations of the various technical features in the foregoing embodiments. It should be noted that there is no contradiction in the combination of these technical features which should be considered as the scope of the description.

Only several implementations of the present disclosure are illustrated in the aforementioned embodiments, and the description thereof is relatively specific and detailed, but it should not be understood as a limitation on the scope of the present disclosure. It should be noted that for those of ordinary skill in the art, without departing from the concept of the present disclosure, several modifications and improvements can be made, which all fall within the protection scope of the present disclosure. Therefore, the protection scope of the disclosure shall be subject to the appended claims.

## Claims

1. A dust collector, comprising
a housing provided with an air inlet, an air inlet channel, an air outlet channel, an air outlet, and a dust collection chamber, the dust collection chamber being in communication with the air inlet and the air outlet through the air inlet channel and the air outlet channel, respectively;
a filter screen disposed in the air outlet channel; and
a spiral air director disposed in the air outlet channel and located on at least one side of an air inlet side and an air outlet side of the filter screen, and wherein air flow flowing through the air outlet channel is directed by the spiral air director to form a swirling air flow.

2. The dust collector according to claim 1, wherein the air inlet channel and the air outlet channel are in communication with the same side of the dust collection chamber, form a U-shaped chamber structure in cooperation with the dust collection chamber.

3. The dust collector according to claim 1, further comprising a dust collection box detachably mounted on the housing, wherein the dust collection box has a hollow structure with an opening on one side, and forms the dust collection chamber in cooperation with the housing.

4. The dust collector according to claim 3, wherein the dust collection box is provided with an openable cover at a bottom thereof.

5. The dust collector according to claim 3, wherein the dust collection box has at least one transparent side wall.

6. The dust collector according to any one of claims 1 to 5, wherein the spiral air director comprises an annular frame and a plurality of blades, each of the blades extends from a center of the frame to an edge thereof, and the plurality of blades are arranged radially.

7. The dust collector according to claim 6, wherein the spiral air director is disposed on both the air inlet side and the air outlet side of the filter screen.

8. The dust collector according to claim 7, wherein the spiral air director located on the air inlet side of the filter screen and the spiral air director located on the air outlet side thereof are coaxially arranged, and the spiral air directors located on both sides are misaligned in a circumferential direction of the frame.

9. The dust collector according to claim 6, wherein the spiral air director further comprises a ventilation ring located in a middle of the frame and coaxially disposed with the frame, each of the blades extends from an outer wall of the ventilation ring to an inner wall of the frame.

10. The dust collector according to any one of claims 1 to 5, wherein the spiral air director comprises a spiral-shaped air directing sheet disposed on an inner wall of the air outlet channel and extending spirally around an axis of the air outlet channel.
